# FASCICULE DE BREVET EUROPEEN

(11) **EP 3 227 131 B1**
(45) Date de publication et mention de la délivrance du brevet: **24.10.2018**
(21) Numéro de dépôt: 15804889.2
(22) Date de dépôt: 10.11.2015
(51) Int. Cl.: B60G 7/00, B62D 7/16, F16C 11/06, F16C 17/24

(54) **DISPOSITIF DE PROTECTION D'UNE ROTULE DE SUSPENSION COMPRENANT UNE GOUTTIÈRE CONTRE LES RUISSELLEMENTS**
SCHUTZVORRICHTUNG EINES AUFHÄNGUNGSKUGELGELENKS MIT EINEM AUSLAUFSCHUTZKANAL
DEVICE PROTECTING A SUSPENSION BALL JOINT COMPRISING AN ANTI-RUN OFF CHANNEL

(30) Priorité: 03.12.2014 FR 1461828
(43) Date de publication de la demande: 11.10.2017
(73) Titulaire: PSA Automobiles SA, 78300 Poissy (FR)
(72) Inventeur: MARCONOT, Pascal, 70400 Brevilliers (FR); LE GUILLOU, Olivier, 25420 Courcelles les Montbeliard (FR)
(74) Mandataire: Rosenberg, Muriel Sylvie
(86) Numéro de dépôt international: PCT/FR2015/053044
(87) Numéro de publication internationale: WO 2016/087732

(56) Documents cités:
- EP-A1- 0 658 469
- EP-A1- 1 653 094
- EP-A2- 0 890 500
- WO-A1-2014/188102
- FR-A1- 2 935 452
- US-A1- 2006 110 213

## Description

La présente invention concerne un dispositif de protection pour une rotule de suspension d'un véhicule automobile, ainsi qu'un véhicule automobile équipé de tels dispositifs.

Certains véhicules automobiles comportent un train avant ou arrière équipé d'une suspension du type MacPherson, comprenant les suspensions pseudo MacPherson recevant un triangle de suspension inférieur, présentant de chaque côté un amortisseur télescopique disposé sensiblement verticalement, qui guide un porte-moyeu de roue. L'extrémité supérieure de la tige de l'amortisseur coulissant dans un corps, est fixée à la caisse du véhicule, le porte-moyeu est fixé à la base de ce corps.

Le porte-moyeu reçoit en-dessous une rotule inférieure de suspension fixée à une extrémité d'un bras de suspension, permettant à la fois les mouvements d'inclinaison du bras lors des débattements de la suspension, et de pivotement du porte-moyeu autour d'un axe sensiblement vertical, passant par cette rotule et par le point supérieur de fixation de l'amortisseur, lors des mouvements de direction.

La rotule de suspension comporte un soufflet en caoutchouc fermant complètement son volume intérieur, pour assurer le maintien et la protection d'une graisse assurant la lubrification de cette rotule.

Pour les véhicules équipés de freins à disque, comprenant un disque fixé sur le moyeu du porte-moyeu, on a généralement la surface de frottement intérieure de ce disque qui se trouve à proximité de la rotule de suspension.

Pour protéger la rotule de suspension, en particulier son soufflet en caoutchouc et la graisse contenue dedans, du rayonnement thermique qui est diffusé par le disque de frein fortement échauffé après un freinage intensif, un type de protection connu, présenté notamment par les documents FR-A1-2935452 et EP-B1-1653094, comporte une collerette disposée au-dessus du soufflet, qui supporte sur un secteur angulaire de son contour extérieur un déflecteur latéral formant sensiblement une portion de cylindre, disposé face au disque de frein.

Le déflecteur latéral forme un écran thermique qui évite d'exposer le soufflet en caoutchouc au rayonnement venant directement du disque de frein.

Toutefois la rotule de suspension peut subir d'autres types d'agressions, venant en particulier d'un ruissellement de matières comme de la neige ou de la boue, sur le corps du porte-moyeu, et qui descendent le long de ce corps pour venir s'accumuler sur le soufflet de la rotule.

De plus certains bras de suspension présentent en-dessous de la rotule une large face supérieure qui est sensiblement plate, favorisant l'accumulation des matières à proximité de la rotule. On a alors si ces matières sont suffisamment dures un risque de contact et d'appui sur le soufflet en caoutchouc, qui peut entraîner une détérioration de ce soufflet.

La présente invention a notamment pour but d'éviter ces inconvénients de la technique antérieure.

Elle propose à cet effet un dispositif de protection prévu pour une rotule de suspension fixée à la base d'un porte-moyeu de roue d'un véhicule automobile, ce dispositif comprenant une collerette prévue pour être fixée au-dessus d'un soufflet de fermeture de la rotule, qui peut recevoir sur un secteur angulaire un déflecteur thermique prévu pour être tourné vers un disque de frein, caractérisé en ce que la collerette comporte vers l'extérieur sur une partie angulaire de son contour, une gouttière comprenant au moins une extrémité permettant une évacuation des ruissellements de ce côté.

Un avantage de ce dispositif de protection est que de manière simple et économique, en utilisant dans certains cas une pièce déjà prévue sur le véhicule pour assurer un écran thermique disposé face à un disque de frein, on réalise une gouttière qui protège une partie angulaire du soufflet de la rotule en évitant des ruissellements dessus, et en les renvoyant vers une extrémité de ce secteur présentant l'évacuation.

On peut protéger ainsi en particulier le secteur angulaire disposé au-dessus du bras de suspension, pour éviter une accumulation de matières sur ce bras qui pourrait venir endommager le soufflet de la rotule.

Le dispositif de protection selon l'invention peut de plus comporter une ou plusieurs des caractéristiques suivantes, qui peuvent être combinées entre elles.

Avantageusement, la gouttière s'étend sur un secteur angulaire prévu pour couvrir verticalement au moins la largeur du bras de suspension qu'elle surplombe.

Dans ce cas, le secteur angulaire de la gouttière peut former près d'un demi-cercle.

Avantageusement, la collerette se prolonge vers l'extérieur directement par la gouttière.

En particulier, la collerette peut comporter des formes successives comprenant en partant de l'intérieur, une partie conique tournée vers le bas, une partie sensiblement horizontale, puis une partie conique tournée vers le haut.

Avantageusement, la collerette avec sa gouttière est formée dans une tôle emboutie.

De plus, la collerette peut comporter sur son contour extérieur des boucles prévues pour sa fixation.

Avantageusement, les extrémités de la gouttière se terminent par une partie descendante.

L'invention a aussi pour objet un véhicule automobile recevant des rotules de suspension disposées à la base de porte-moyeux de roue, qui comportent des dispositifs de protection comprenant l'une quelconque des caractéristiques précédentes.

En particulier, les porte-moyeux de roue peuvent faire partie d'une suspension du type MacPherson, comprenant un bras inférieur de suspension présentant une forme sensiblement plate, disposant d'une aile tournée vers l'extérieur se terminant par la fixation de la rotule.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue du côté droit d'un train avant de véhicule automobile comprenant une suspension du type MacPherson, comportant une rotule de suspension équipée d'un dispositif de protection selon l'art antérieur ;
- la figure 2 est une vue d'un dispositif de protection de la rotule selon l'invention ; et
- la figure 3 est une vue de dessus du porte-moyeu comprenant la rotule équipée de ce dispositif de protection.

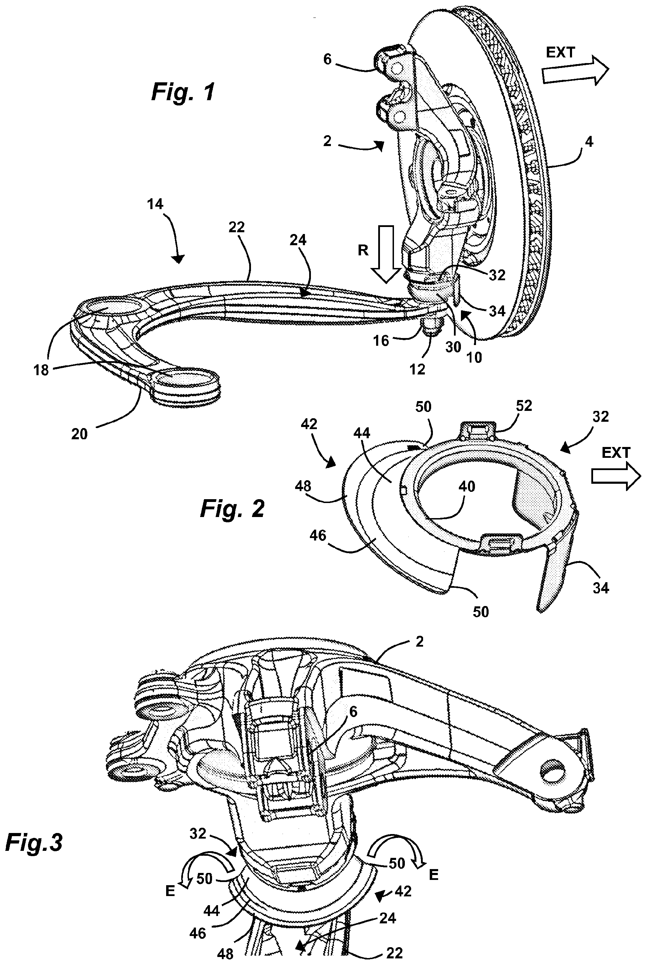

La figure 1 présente un porte-moyeu 2 supportant un moyeu recevant du côté extérieur du véhicule indiqué par la flèche notée « EXT », un disque de frein 4, puis une roue non représentée.

Le porte-moyeu 2 comporte une forme allongée verticalement, comprenant en partie supérieure deux tenons 6 prévus pour être ajustés dans une chape fixée à la base du corps de l'amortisseur. Deux vis horizontales insérées dans des perçages de ces tenons 6, serrent ce montage en chape.

La forme allongée du porte-moyeu 2 se termine à sa base par un logement recevant le corps d'une rotule de suspension 10, la tige sensiblement verticale de cette rotule 12 tournée vers le bas, est ajustée dans un perçage d'extrémité d'un bras inférieur de suspension 14, puis serrée par un écrou 16.

Le bras de suspension 14 présentant une forme sensiblement plate disposée horizontalement, a une forme en « L » comprenant une base 20 alignée longitudinalement, comportant deux perçages 18 recevant des articulations fixées à la caisse du véhicule, formant un pivot suivant cet axe longitudinal, et une aile 22 tournée vers l'extérieur, se terminant par la fixation de la rotule 10.

La rotule 10 comporte un soufflet de protection en caoutchouc 30 enserrant en partie supérieure le corps de cette rotule et en partie inférieure la tige 12 de cette rotule, afin d'assurer l'étanchéité de son boîtier.

Un dispositif de protection 32 réalisé en tôle, comporte une collerette circulaire formant sensiblement une rondelle, fixée en partie supérieure du soufflet 30, qui reçoit sur une partie angulaire tournée vers l'extérieur, face au disque de frein 4, une protection thermique 34 formant une partie cylindrique descendant vers le bas, qui est centrée sur l'axe de la rotule.

Lors des roulages dans des conditions difficiles comprenant des fortes projections de matières comme de la boue ou de la neige, on peut avoir un ruissellement de ces éléments le long de la partie inférieure du porte-moyeu 2 et du soufflet de la rotule 30, suivant la flèche notée « R », qui peuvent s'accumuler alors sur la face supérieure sensiblement plane 24 du bras de suspension 14, à proximité de la rotule 10.

De plus le bras de suspension 14 présenté sur cette figure, comporte sur la partie centrale de la face supérieure 24 un creux longitudinal prévu pour former un allégement de cette pièce, qui se prolonge quasiment jusqu'à la rotule 10, favorisant la rétention de matière à la base du soufflet 30. On a alors lors des débattements importants de la suspension un risque de pression de cette matière durcie sur le soufflet en caoutchouc 30, qui peut l'endommager, et le déboîter ou le percer.

Les figures 2 et 3 présentent un dispositif de protection 32 comprenant la collerette supérieure 40 comportant sur son contour deux petites boucles 52 diamétralement opposées et tournées vers le haut, servant à sa fixation, et du côté extérieur la protection thermique 34 tournée vers le bas.

La collerette 40 présente de plus sur son contour extérieur, du côté intérieur du véhicule, une gouttière 42 s'étendant sur un large secteur angulaire, un peu inférieur à un demi-cercle, les extrémités de ce secteur débordant au-delà de la largeur du bras de suspension 14 qu'elle surplombe.

La gouttière 42 comporte des formes successives centrées sur l'axe de la rotule 10, comprenant en partant de l'intérieur une partie conique tournée vers le bas 44, une partie sensiblement horizontale 46 et une partie conique tournée vers le haut 48, de manière à former un chéneau.

Les deux extrémités 50 de la gouttière 42 se terminent par une partie légèrement descendante, de manière à favoriser l'écoulement des matières tombant dans ce chéneau vers ses extrémités, ou elles peuvent ensuite s'écouler en dehors du bras de suspension 14, à l'avant ou à l'arrière de celui-ci comme présenté par les flèches « E » de la figure 3.

On évite ainsi l'accumulation de matières sur la face supérieure du bras de suspension 24, et en particulier dans le creux médian se trouvant sur cette face.

On notera que le dispositif de protection 32 suivant l'invention peut se faire de manière simple et économique, en utilisant une protection déjà prévue sur la rotule 10 pour la protéger du rayonnement thermique du disque de frein 4, avec seulement une petite quantité de matière en plus pour former la gouttière 42. On n'a ainsi pas de pièce supplémentaire à installer sur le véhicule.

## Revendications

1. Dispositif de protection prévu pour une rotule de suspension (10) fixée à la base d'un porte-moyeu (2) de roue d'un véhicule automobile, ce dispositif comprenant une collerette (40) prévue pour être fixée au-dessus d'un soufflet de fermeture de la rotule (30), qui peut recevoir sur un secteur angulaire un déflecteur thermique (34) prévu pour être tourné vers un disque de frein (4), **caractérisé en ce que** la collerette (40) comporte vers l'extérieur sur une partie angulaire de son contour, une gouttière (42) comprenant au moins une extrémité (50) permettant une évacuation des ruissellements de ce côté.

2. Dispositif de protection selon la revendication 1, **caractérisé en ce que** la gouttière (42) s'étend sur un secteur angulaire prévu pour couvrir verticalement au moins la largeur du bras de suspension (14) qu'elle surplombe.

3. Dispositif de protection selon la revendication 2, **caractérisé en ce que** le secteur angulaire de la gouttière (42) forme près d'un demi-cercle.

4. Dispositif de protection selon l'une quelconque des revendications précédentes, **caractérisé en ce que** la collerette (40) se prolonge vers l'extérieur directement par la gouttière (42).

5. Dispositif de protection selon la revendication 4, **caractérisé en ce que** la collerette comporte des formes successives comprenant en partant de l'intérieur, une partie conique tournée vers le bas (44), une partie sensiblement horizontale (46), puis une partie conique tournée vers le haut (48).

6. Dispositif de protection selon la revendication 4 ou 5, **caractérisé en ce que** la collerette (40) avec sa gouttière (42) est formée dans une tôle emboutie.

7. Dispositif de protection selon la revendication 6, **caractérisé en ce que** la collerette (40) comporte sur son contour extérieur, des boucles (52) prévues pour sa fixation.

8. Dispositif de protection selon l'une quelconque des revendications précédentes, **caractérisé en ce que** les extrémités (50) de la gouttière (42) se terminent par une partie descendante.

9. Véhicule automobile recevant des rotules de suspension (10) disposées à la base de porte-moyeux de roue (2), **caractérisé en ce que** ces rotules comportent des dispositifs de protection (32) réalisés selon l'une quelconque des revendications précédentes.

10. Véhicule automobile selon la revendication 9, **caractérisé en ce que** les porte-moyeux de roue (2) font partie d'une suspension du type MacPherson, comprenant un bras inférieur de suspension (14) présentant une forme sensiblement plate, disposant d'une aile (22) tournée vers l'extérieur se terminant par la fixation de la rotule (10).

## Patentansprüche

1. Schutzvorrichtung, die für ein Aufhängungskugelgelenk (10) vorgesehen ist, das an der Basis eines Nabenträgers (2) eines Rads eines Kraftfahrzeugs befestigt ist, wobei diese Vorrichtung einen Bund (40) umfasst, der dazu vorgesehen ist, über einem Verschlussbalg des Gelenks (30) befestigt zu sein, der auf einem Winkelsektor einen Wärmeablenker (34) aufnehmen kann, der vorgesehen ist, um zu einer Bremsscheibe (4) gekehrt zu sein, **dadurch gekennzeichnet, dass** der Bund (40) nach außen auf einem Winkelteil seiner Kontur einen Kanal (42) umfasst, der mindestens ein Ende (50) umfasst, das ein Ableiten des Abflusses auf dieser Seite erlaubt.

2. Schutzvorrichtung nach Anspruch 1, **dadurch gekennzeichnet, dass** sich der Kanal (42) auf einem Winkelsektor erstreckt, der vorgesehen ist, um vertikal mindestens die Breite des Querlenkers (14) über dem er liegt, zu bedecken.

3. Schutzvorrichtung nach Anspruch 2, **dadurch gekennzeichnet, dass** der Winkelsektor des Kanals (42) in etwa einen Halbkreis bildet.

4. Schutzvorrichtung nach einem der vorhergehenden Ansprüche, **dadurch gekennzeichnet, dass** sich der Bund (40) nach außen direkt durch den Kanal (42) verlängert.

5. Schutzvorrichtung nach Anspruch 4, **dadurch gekennzeichnet, dass** der Bund aufeinanderfolgende Formen umfasst, die, ausgehend von dem Inneren, einen Kegelteil (44), der nach unten gerichtet ist, einen im Wesentlichen horizontalen Teil (46) und dann einen Kegelteil, der nach oben (48) gerichtet ist, umfasst.

6. Schutzvorrichtung nach Anspruch 4 oder 5, **dadurch gekennzeichnet, dass** der Bund (40) mit seinem Kanal (42) aus einem Stanzblech gebildet ist.

7. Schutzvorrichtung nach Anspruch 6, **dadurch gekennzeichnet, dass** der Kragen (40) auf seiner äußeren Kontur Schnallen (52), die für seine Befestigung vorgesehen sind, umfasst.

8. Schutzvorrichtung nach einem der vorhergehenden Ansprüche, **dadurch gekennzeichnet, dass** die Enden (50) des Kanals (42) in einem absteigenden Teil enden.

9. Kraftfahrzeug, das Aufhängungskugelgelenke (10) empfängt, die an der Basis des Radnabenträgers (2) angeordnet sind, **dadurch gekennzeichnet, dass** diese Gelenke Schutzvorrichtungen (32) umfassen, die gemäß einem der vorhergehenden Ansprüche hergestellt sind.

10. Kraftfahrzeug nach Anspruch 9, **dadurch gekennzeichnet, dass** die Radnabenträger (2) zu einer Aufhängung vom Typ MacPherson gehören, die einen unteren Querlenker (14) umfasst, der eine im Wesentlichen flache Form aufweist, der über einen Flügel (22) verfügt, der nach außen gekehrt ist, der in der Befestigung des Gelenks (10) endet.

## Claims

1. A protection device provided for a suspension ball joint (10) fixed to the base of a hub carrier (2) of a wheel of a motor vehicle, this device including a flange (40) provided to be fixed above a gaiter that closes off the ball joint (30), which can receive, over an angular sector, a heat deflector (34) provided to be turned toward a brake disc (4), **characterized in that** the flange (40) comprises toward the exterior over an angular part of its outline, a channel (42) including at least one end (50) permitting an evacuation of run off from this side.

2. The protection device according to Claim 1, **characterized in that** the channel (42) extends over an angular sector provided to vertically cover at least the width of the suspension arm (14) which it overhangs.

3. The protection device according to Claim 2, **characterized in that** the angular sector of the channel (42) forms nearly a semicircle.

4. The protection device according to any one of the preceding claims, **characterized in that** the flange (40) extends towards the exterior directly by the channel (42).

5. The protection device according to Claim 4, **characterized in that** the flange comprises successive shapes including, starting from the interior, a conical part turned downward (44), a substantially horizontal part (46), then a conical part turned upward (48).

6. The protection device according to Claim 4 or 5, **characterized in that** the flange (40) with its channel (42) is formed in a stamped metal sheet.

7. The protection device according to Claim 6, **characterized in that** the flange (40) comprises, over its exterior outline, loops (52) provided for its attachment.

8. The protection device according to any one of the preceding claims, **characterized in that** the ends (50) of the channel (42) terminate by a descending part.

9. A motor vehicle receiving suspension ball joints (10) disposed at the base of the wheel hub carrier (2), **characterized in that** these ball joints comprise protection devices (32) realized according to any one of the preceding claims.

10. The motor vehicle according to Claim 9, **characterized in that** the wheel hub carriers (2) form part of a suspension of the MacPherson type, including a lower suspension arm (14) presenting a substantially flat shape, having a wing (22) turned toward the exterior terminating by the attachment of the ball joint (10).
